# EUROPEAN PATENT APPLICATION

(11) **EP 4 297 530 A1**
(43) Date of publication of application: **27.12.2023**
(21) Application number: 22755751.9
(22) Date of filing: 06.01.2022
(51) Int. Cl.: H04W 92/04, H04W 76/18, H04W 28/08, H04W 48/06, H04W 88/18, H04L 45/28

(54) **SERVER, REQUEST ENTITY, AND METHOD THEREFOR**

(30) Priority: 17.02.2021 JP 2021023808
(71) Applicant: NEC Corporation, 108-8001 Tokyo (JP)
(72) Inventor: TAKAKURA, Tsuyoshi, Tokyo 110-0012 (JP); TAMURA, Toshiyuki, Tokyo 108-8001 (JP)
(74) Representative: MacDougall, Alan John Shaw
(86) International application number: PCT/JP2022/000273
(87) International publication number: WO 2022/176425

(57) **Abstract**

In response to receiving from a requesting entity (2) a request for a connection to an entity providing a service in an edge data network (4), a first server (7) attempts to identify a second server (5) located in the edge data network (7) based on at least one selection criterion. The at least one selection criterion includes a congestion state of a server located within the edge data network (4). If the second server (5) is identified, the first server (7) sends information about the second server (5) to the requesting entity (2). If the second server (5) cannot be identified, the first server (7) sends to the requesting entity (2) a rejection message indicating that the second server (5) cannot be identified. This can contribute, for example, to providing a suitable selection criterion for identifying an edge server.

## Description

### Technical Field

The present disclosure relates to radio communication networks, and in particular to devices and methods for edge computing.

### Background Art

Edge computing aims to move applications, data, and computing power (services) from centralized points (e.g., centralized data centers) to locations closer to users (e.g., distributed data centers). The Industry Specification Group called Multi-access Edge Computing (MEC) of the European Telecommunications Standards Institute (ETSI) has standardized an application platform and APIs for edge computing. For example, MEC provides application developers and content providers with cloud computing capabilities and information technology (IT) service environments within a Radio Access Network (RAN) in close proximity to mobile subscribers. This environment provides ultra-low latency and high bandwidth, as well as direct access to radio network information (radio network information generation) (e.g., subscriber location and cell load) that can be leveraged by applications and services.

The Third Generation Partnership Project (3GPP) SA6 working group has begun standardization work on an architecture for enabling Edge Applications. (See, for example, Non-Patent Literature 1). This 3GPP architecture is called the EDGEAPP architecture. The EDGEAPP architecture provides a specification of an enabling layer to facilitate communication between application clients (ACs) running on a User equipment (UE) and applications deployed at the edge. According to the EDGEAPP architecture, edge applications provided by Edge Application Servers (EASs) are provided to ACs in a UE by an Edge Configuration Server (ECS) and an Edge Enabler Server (EES) through an Edge Enabler Client (EEC) of that UE.

An AC running on a UE needs to discover a server application (i.e., EAS in 3GPP SA6 terminology, or MEC application in ETSI ISG MEC terminology) on the edge cloud. The AC can use another client on the UE, i.e., the EEC, for discovery of the server application. The EEC provides ACs with discovery of available EASs in the edge data network.

A UE is initially provisioned from an ECS with information required to connect to an Edge Data Network (EDN). The EDN includes one or more EESs and one or more EASs. More specifically, the EEC of the UE communicates with the ECS for service provisioning. Service provisioning allows configuring the EEC with information about available Edge Computing services, based on the UE location, service requirements, and connectivity. This configuration includes the necessary address information for the EEC to establish one or more connections with one or more EESs deployed in the EDN.

For this service provisioning, the EEC makes a service provisioning request to the ECS to request resources for providing services in the EDN and information about the connection or configuration. The information about the connection or configuration includes, for example, information about available edge computing services, information about a server in the EDN, identifier (ID) and address information (e.g., Internet Protocol (IP) address, Single-Network Slice Selection Assistance Information (S-NSSAI), and service area information) for that server, EDN configuration information, and configuration information about the Edge Data Network for the EEC to establish the connection.

According to Non-Patent Literature 1, if Application Client profile(s) are provided by the EEC, then the ECS identifies (or selects, or determines, or discovers) the EES(s) based on the provided Application Client profile(s) and the UE location. If Application Client profile(s) are not provided, then the ECS identifies the EES(s) based on the UE-specific service information at the ECS, if available, and the UE location. Alternatively, the ECS identifies the EES(s) by applying the Edge Computing Service Provider (ECSP) policy (e.g., based only on the UE location). If the ECS is unable to determine the EES information using the inputs from the EES in the service provisioning request, UE-specific service information at the ECS or the ECSP policy, the ECS needs to reject the service provisioning request and respond to the EEC with an appropriate failure cause. If the service provisioning request fails, the EEC can resend the service provisioning request, including the missing information as indicated by the received failure cause.

The EEC then communicates with the EES to perform EAS discovery for the AC. EAS discovery allows the EEC to obtain information about available EASs of interest. The discovery of EAS(s) is based on matching EAS discovery filters provided by the EEC. For EAS discovery, the EEC makes an EAS discovery request to the EES to request information about devices, connections, or configurations required to provide services in the EDN. Such information includes, for example, information about available edge computing services and information about servers in the EDN.

According to Non-Patent Literature 1, if EAS discovery filters are provided by the EEC, then the EES identifies (or selects, or determines, or discovers) the EAS(s) based on the provided EAS discovery filters and the UE location. If EAS discovery filters are not provided, then the EES identifies the EAS(s) based on the UE-specific service information at the EES, if available, and the UE location. Alternatively, the EES identifies the EAS(s) by applying the ECSP policy (e.g., based only on the UE location). If the EES is unable to determine the EAS information using the inputs from the EEC in the EAS discovery request, UE-specific service information at the EES or the ECSP policy, the EES needs to reject the EAS discovery request and respond to the EEC with an appropriate failure cause. If the UE is located outside the Geographical or Topological Service Area of an EAS, then the EES should not include this EAS in the discovery response. If the EAS discovery request fails, the EES can resend the EAS discovery request, including the missing information as indicated by the received failure cause.

The entities that make service provisioning requests and/or EAS discovery requests are hereinafter collectively referred to as request entities. Service provisioning requests and EAS discovery requests (Edge Application Server discovery requests) are collectively referred to as simply "requests".

### Citation List

### Non Patent Literature

[Non Patent Literature 1] 3GPP TS 23.558 V1.2.0 (2020-11) "3rd Generation Partnership Project; Technical Specification Group Services and System Aspects; Architecture for enabling Edge Applications; (Release 17)", November 2020

### Summary of Invention

### Technical Problem

The inventors have studied the EDGEAPP architecture and found various problems. One of these problems relates to the identification (or selection, or decision, or discovery) of an EES(s) by an ECS and the identification (or selection, or decision, or discovery) of an EAS(s) by an EES. At this time, it is not sufficiently clear how an ECS specifically identifies an EES(s). Similarly, it is not sufficiently clear how an EES specifically identifies an EAS(s). In other words, at this time, the 3GPP SA6 Working Group has not sufficiently defined the selection criteria or logic for identifying preferred or suitable servers (hereafter referred to as edge servers) located in an Edge Data Network. In the 3GPP EDGEAPP architecture, edge servers include one or more EESs and one or more EASs.

Another one of the problems relates to the behavior of a requesting entity (e.g., EEC) when a service provisioning request or an EAS discovery request is rejected. At present, it is not sufficiently clear how a requesting entity should behave when a service provisioning request or EAS discovery request is rejected.

One of the objects to be attained by example embodiments disclosed herein is to provide apparatuses, methods, and programs that contribute to solving at least one of the above-described problems. It should be noted that this object is merely one of the objects to be attained by the example embodiments disclosed herein. Other objects or problems and novel features will be made apparent from the following description and the accompanying drawings.

### Solution to Problem

In a first aspect, a first server includes at least one memory and at least one processor coupled to the at least one memory. The at least one processor is configured to, in response to receiving from a requesting entity a request for a connection to an entity providing a service in an edge data network, attempt to identify a second server located in the edge data network based on at least one selection criterion. The at least one processor is configured to, if the second server is identified, send information about the second server to the requesting entity. The at least one processor is configured to, if the second server cannot be identified, send to the requesting entity a rejection message indicating that the second server cannot be identified. The at least one selection criterion includes a congestion state of a server located within the edge data network.

In a second aspect, a method performed by a first server includes the following steps:
(a) in response to receiving from a requesting entity a request for a connection to an entity providing a service in an edge data network, attempting to identify a second server located in the edge data network based on at least one selection criterion, wherein the at least one selection criterion includes a congestion state of a server located within the edge data network;
(b) if the second server is identified, sending information about the second server to the requesting entity; and
(c) if the second server cannot be identified, sending to the requesting entity a rejection message indicating that the second server cannot be identified.

In a third aspect, a requesting entity includes at least one memory and at least one processor coupled to the at least one memory. The at least one processor is configured to send to a first server a request for a connection to an entity providing a service in an edge data network, and receive a response to the request from the first server. The at least one processor is configured to, if the response contains information about a second server identified based on at least one selection criterion and located within the edge data network, use the information for a communication of providing the service. The at least one processor is configured to, if the response contains a rejection message indicating that the second server cannot be identified and the response indicates that a backoff is required, perform a backoff before sending a next request.

In a fourth aspect, a method performed by a requesting entity includes the following steps:
(a) sending to a first server a request for a connection to an entity providing a service in an edge data network;
(b) receiving a response to the request from the first server;
(c) if the response contains information about a second server identified based on at least one selection criterion and located within the edge data network, using the information for a communication of providing the service; and
(d) if the response contains a rejection message indicating that the second server cannot be identified and the response indicates that a backoff is required, performing a backoff before sending a next request.

In a fifth aspect, a program includes a set of instructions (software codes) that, when loaded into a computer, cause the computer to perform the method according to the second or fourth aspect described above.

### Advantageous Effects of Invention

According to the above-described aspects, it is possible to provide apparatuses, methods, and programs that contribute to solving at least one of the above-mentioned problems.

### Brief Description of Drawings

Fig. 1 shows an example of the architecture of a network according to an example embodiment;
Fig. 2 is a flowchart showing an example of the operation of a first server according to an example embodiment;
Fig. 3 is a flowchart showing an example of the operation of a first server according to an example embodiment;
Fig. 4 is a flowchart showing an example of the operation of a requesting entity according to an example embodiment;
Fig. 5 is a sequence diagram showing an example of the operations of an EEC and ECS according to an example embodiment;
Fig. 6 is a sequence diagram showing an example of the operations of an EEC and EES according to an example embodiment;
Fig. 7 is a sequence diagram showing an example of the operations of a source EES (S-EES) and ECS according to an example embodiment;
Fig. 8 is a sequence diagram showing an example of the operations of a source EES (S-EES) and target EES (T-EES) according to an example embodiment;
Fig. 9 is a block diagram showing an example configuration of a UE according to an example embodiment; and
Fig. 10 is a block diagram showing an example configuration of a server according to an example embodiment.

### Example Embodiment

Specific example embodiments will be described hereinafter in detail with reference to the drawings. The same or corresponding elements are denoted by the same symbols throughout the drawings, and duplicated explanations are omitted as necessary for the sake of clarity.

Each of the example embodiments described below may be used individually, or two or more of the example embodiments may be appropriately combined with one another. These example embodiments include novel features different from each other. Accordingly, these example embodiments contribute to attaining objects or solving problems different from one another and contribute to obtaining advantages different from one another.

The example embodiments presented below are described primarily for the 3GPP system (e.g., 5G system (5GS)). However, these example embodiments may be applied to other radio communication systems.

### First Example Embodiment

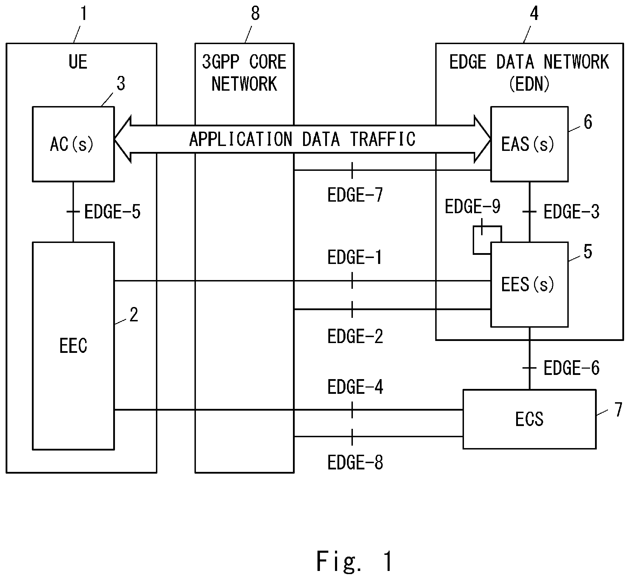

Fig. 1 shows an example of the architecture of a network according to this example embodiment. The architecture in Fig. 1 corresponds to the 3GPP EDGEAPP architecture. Each of the elements shown in Fig. 1 is a functional entity, providing functions and interfaces as defined by the 3GPP. Each of the elements (functional entities) shown in Fig. 1 can be implemented, for example, as a network element on dedicated hardware, as a software instance running on dedicated hardware, or as a virtualized function instantiated on an application platform.

In the example in Fig. 1, a User Equipment (UE) 1 includes an Edge Enabler Client (EEC) 2 and one or more Application Clients (ACs) 3. In other words, an EEC 2 and one or more ACs 3 are deployed in the UE 1 and run on the UE 1. Although not explicitly shown in Fig. 1, the UE 1 communicates with a 3GPP core networks (e.g., 5G Core (5GC)) via an access network (e.g., Radio Access Network (e.g., NG Radio Access Network (NG-RAN))). In this way, the UE 1 provides the EEC 2 and AC(s) 3 with connectivity to a data network via the access network and the 3GPP Core Network 8.

The EEC 2 provides supporting functions required by the AC(s) 3. Specifically, the EEC 2 provides provisioning of configuration information to enable the exchange of application data traffic with an Edge Application Server (EAS). In addition, the EEC 2 provides functions for a discovery of one or more EASs available within an Edge Data Network (EDN) 4. The EEC 2 uses EAS endpoint information obtained from the EAS discovery in routing of outgoing application data traffic to an EAS. Further, the EEC 2 provides functions for registration (i.e., registration, update, and de-registration) of an EES 5 and EAS(s) 6.

Each AC 3 is an application running on the UE 1. Each AC 3 connects to one or more EASs to utilize edge computing services and exchanges application data traffic with these EASs.

One Edge Data Network (EDN) 4 includes one or more Edge Enabler Servers (EES) 5 and one or more Edge Application Servers (EASs) 6. The EDN 4 may be a Local Area Data Network (LADN). An LADN allows limited access to a DN (and the corresponding Data Network Name (DNN)) only in one or more specific areas. Outside of these areas, the UE 1 cannot access the relevant DN (and DNN). An area where LADN DNN is available is called a LADN Service Area and is configured in the network as a set of Tracking Areas (TAs). DNNs that do not use LADN features do not have a LADN service area and are not restricted by those features. An LADN service area can be provided to the UE 1 by an Access and Mobility Management Function (AMF) in the 3GPP core network 8 when the UE 1 registers. This allows the UE 1 to know the area where the LADN (or EDN) is available and not attempt to access this LADN (or EDN) outside of this area.

Each EES 5 provides supporting functions required by an EAS(s) 6 and the EEC 2. Specifically, each EES 5 provides the EEC 2 with the provisioning of configuration information, thereby enabling the exchange of application data traffic with an EAS(s) 6. Each EES 5 provides functions for registration (i.e., registration, update, and de-registration) of the EEC 2 and EAS(s) 6. Each EES 5 provides functions of application context transfer between EESs. These functions are required for edge application mobility (or application context relocation) for service continuity. Edge Application Mobility relocates the application context or application instance or both for a user (i.e., AC) from a source EAS (or EDN or LADN) to a target EAS (or EDN or LADN). Edge application mobility can be triggered by UE mobility events or non-UE mobility events. UE mobility events include, for example, intra-EDN UE mobility, inter-EDN UE mobility, and LADN-related UE mobility. Non-UE mobility events include, for example, EAS or EDN overload situations and EAS maintenance (e.g., graceful shutdown of an EAS).

In addition, each EES 5 supports functionality of an Application Programming Interface (API) invoker and API exposing function. Each EES 5 may interact with the 3GPP Core Network 8 directly (e.g., via a Policy Control Function (PCF)) or indirectly (e.g., via a Network Exposure Function (NEF) or Service Capability Exposure Function (SCEF)) to access services and capabilities of network functions in the 3GPP Core Network 8. Each EES 5 may support external exposure of services and capabilities of 3GPP network functions to EAS(s) 6.

Each EAS 6 is located in the EDN 4 and performs server functions of an application. The server functions of an application may be available only at the edge. In other words, the server functions of an application may be available only as an EAS. However, the server functions of an application may be available both at the edge and in the cloud. In other words, the server functions of an application may be available as an EAS and in addition may be available as an application server in the cloud. The term "cloud" here means a central cloud located further away from the UE 1 than the EDN 4. Accordingly, an application server in the cloud means a server deployed in a centralized location (e.g., a centralized data center). Each EAS 6 may consume or utilize 3GPP core network capabilities. Each EAS 6 may directly invoke 3GPP Core Network function APIs. Alternatively, each EAS 6 may consume or utilize 3GPP core network capabilities via the EES 5, or via a NEF or SCEF.

The Edge Configuration Server (ECS) 7 provides supporting functions needed for the EEC 2 to connect with EES(s) 5. Specifically, the ECS 7 provides provisioning of edge configuration information to the EEC 2. The edge configuration information includes information for the EEC 2 to connect to EES(s) 5 (e.g., service area information applicable to an LADN) and information for establishing a connection with EES(s) 5 (e.g., Uniform Resource Identifier (URI)). The ECS 7 provides functions for registration (i.e., registration, update, and de-registration) of EES(s) 5. In addition, ECS 7 supports functionality of an API invoker and API exposing function. The ECS 7 may interact with the 3GPP Core Network 8 directly (e.g., via a PCF) or indirectly (e.g., via a NEF or SCEF) to access services and capabilities of network functions in the 3GPP Core Network 8. The ECS 7 may be deployed in the Mobile Network Operator (MNO) domain serving the 3GPP core network 8 or in a third-party domain by a service provider (e.g., an Edge Computing Service Provider (ECSP)).

The example configuration in Fig. 1 shows only representative elements for illustrative purposes. For example, the ECS 7 may be connected to multiple EDNs, including the EDN 4.

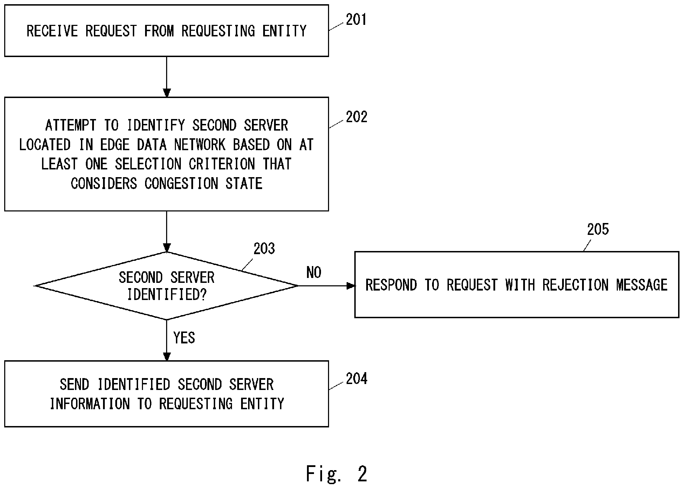

Fig. 2 is a flowchart showing an example of the operation of a first server according to this example embodiment. The first server attempts to identify (or discover, or select, or determine) a preferred or suitable edge server deployed in the EDN 4. In one example, the first server may be the ECS 7, which may attempt to identify one or more EESs in response to a request from the EEC 2 of the UE 1. Alternatively, the first server may be the ECS 7 and may attempt to identify a target EES (T-EES) upon request from a source EES (S-EES) during edge application mobility (or application context relocation). In another example, the first server may be an EES 5, which may attempt to identify one or more EASs in response to a request from the EEC 2 of the UE 1. Alternatively, the first server may be an EES 5 (T-EES) and may attempt to identify a target EAS (T-EAS) upon request from an S-EES during edge application mobility (or application context relocation). Alternatively, the first server may be an EES 5 and may attempt to identify EAS(s) in the verification of a request for registration (hereafter referred to as registration verification) in a registration procedure from the EEC 2.

In step 201, the first server receives a request from a requesting entity. The requesting entity may be a functional entity. In the case where the first server is the ECS 7, the requesting entity may be the EEC 2, or it may be an S-EES (e.g., EES 5) in edge application mobility. In the case where the first server is an EES 5, the requesting entity may be the EEC 2, may be an S-EES in edge application mobility, or may be the EEC 2 in a procedure of registration of the EEC 2 to the EES 5. The request requests a connection to an entity that provides a service in the edge data network. The request may be a service provisioning request or an EAS discovery request. The request may be an EEC registration request or an EEC registration update request.

In step 202, in response to receiving the request, the first server attempts to identify a second server that is located in the EDN 4 and meets at least one selection criterion. In other words, the first server identifies a second server deployed within the EDN 4 based on at least one selection criterion. Here, at least one factor considered in the at least one selection criterion includes a congestion state of a server deployed in the EDN 4. The congestion state of a server may indicate whether the server is congested or not. Alternatively, the congestion state may indicate one of three or more congestion levels (e.g., no congestion, low congestion, medium congestion, high congestion). The congestion state may be referred to as a load state. In one example, the first server may identify a second server that is not congested and meets the remaining selection criteria. In one example, the first server may exclude information about second servers that are determined to be congested (or in high load state) from the information (or list) of at least one available second server.

Each second server may dynamically notify the first server of its congestion state. Specifically, the second server may notify the first server of its congestion state when registering the second server with the first server, and may also notify the first server of congestion state updates in response to changes in congestion state. More specifically, each EAS 6 may notify the EES 5 of its congestion state in an Edge Application Server Registration procedure and may notify the EES 5 of its congestion state update in an Edge Application Server Registration Update procedure. The EES 5 may notify the ECS 7 of its congestion state in an Edge Enabler Server Registration procedure and may notify the ECS 7 of its congestion state update in an Edge Enabler Server Registration Update procedure. In addition, the EES 5 may notify the ECS 7 of the congestion state of each of the registered EAS(s) in an Edge Enabler Server Registration procedure and may notify the ECS 7 of the updated congestion state of each of the registered EAS(s) in an Edge Enabler Server Registration Update procedure. Alternatively, each second server may periodically notify the first server of its congestion state.

Alternatively, the first server may perform activity monitoring of a second server. More specifically, if the first server determines that a second server is unable to provide service due to a failure of the second server or a failure of the communication path to the second server, the first server may manage this as a serious congestion state for the second server. Alternatively, in the case of a planned service interruption, such as when a second server moves to maintenance, the second server may notify the first server of this fact. In one example, the first server may exclude, from the information (or list) of at least one available second server, information about a second server that has been determined to be incapable of providing service. Alternatively, the first server may obtain congestion states of second servers from a Network Data Analytics Function (NWDAF), which is not explicitly shown in Fig. 1. In this case, the first server can subscribe to a congestion-related service provided by the NWDAF to obtain congestion information on a per-second server, per-EAS, or per-EES basis.

Each second server may determine whether or not it is congested and provide congestion state information to the first server indicating whether or not it is congested. The congestion state information is not limited to two levels. For example, the second server may identify one of three or more congestion levels (e.g., no congestion, low congestion, medium congestion, high congestion) and inform the first server of the identified congestion level. In this case, the congestion state information may be information indicating one of the three or more congestion levels.

In the case of selection (or determination, or discovery, or identification) of an EES(s) by the ECS 7, second servers are EESs. In this case, other factors considered in the at least one selection criterion may include at least one of the following: the location of the UE 1, at least one Application Client profile provided by the EEC 2, or the operational status of a second server (i.e., EES). Specifically, the ECS 7 may identify an EES(s) that match the provided Application Client profile(s). If multiple Application Client profiles are provided, the ECS 7 may identify an EES(s) that match all the Application Client profiles. Alternatively, the ECS 7 may identify an EES(s) that match at least one of the provided multiple Application Client profiles. Alternatively, the ECS 7 may identify an EES(s) on a per-Application Client profile basis.

An Application Client profile includes, for example, at least one of the following: "Application Client Schedule", "Expected Application Client Geographical Service Area", "Service Continuity Support", or "List of EASs". The Application Client Schedule indicates an expected operation schedule, e.g., time window, of the AC 3. The Expected Application Client Geographical Service Area indicates an expected location(s), e.g., route, of the UE 1 during the expected operating schedule of the AC 3. The Service Continuity Support indicates whether or not service continuity support is needed by the AC 3. The List of EASs includes an EAS ID and may further include Application Client Service Key Performance Indicators (KPIs). The Application Client Service KPIs indicate service characteristics required by the AC 3. These service characteristics include, for example, at least one of the following: connection bandwidth, maximum request rate to be generated by the AC, maximum response time, maximum compute resources required by the AC, maximum memory resources required by the AC, or Information specific to the AC type (e.g., video, Virtual Reality (VR), etc.).

Note that "matching the provided Application Client profile" may mean that information on an EES (e.g., characteristics, performance, status) matches information regarding the Application Client contained in the Application Client profile. Alternatively, this may mean that information (e.g., characteristics, performance, status) about the EES satisfies a condition regarding the Application Client contained in the Application Client profile. The selection criteria for EES(s) may be as follows. For example, the ECS 7 may identify an EES(s) that matches all the information elements contained in the Application Client profile. Alternatively, the ECS 7 may identify an EES(s) that matches all the information elements in the Application Client profile except the "List of EASs" and that matches at least one item in the "List of EASs". Alternatively, the ECS 7 may identify an EES(s) that matches at least one information element contained in the Application Client profile.

The UE Location may identify the network to which the UE 1 is connected or the position of the UE 1. The value of the UE Location may be a Cell Identity (ID), Tracking Area Identity (TAI), Global Positioning System (GPS) Coordinates, or a civic address. The selection criteria concerning the UE location for the selection of EES(s) by the ECS 7 may require that the location of the UE 1 be within an EDN service area or EES service area. If the EDN 4 is deployed using an LADN, the EDN service area may be the same as the LADN service area. If the EDN service area is defined, an EES service area may be the same as the EDN service area. The EES service area may be a topological service area or a geographical service area. A topological service area may be defined by one or more cell IDs or by one or more TAIs.

On the other hand, in the case of selection (or determination, or discovery, or identification) of an EAS(s) by the EES 5, second servers are EAS. In this case, other factors considered in the at least one selection criterion may include at least one of the following: the location of the UE 1, EAS discovery filters provided by the EEC 2, or the operational status of a second server (i.e., EAS). Specifically, the EES 5 may identify an EAS(s) that match the provided EAS discovery filters. The EAS discovery filters indicate a set of characteristics needed to determine the requested EAS. For example, the EAS discovery filters may include one or both of "List of Application Client characteristics" and "List of Edge Application Server characteristics".

The List of Application Client characteristics contained in the EAS discovery filters may indicate multiple Application Clients (i.e., multiple Application Client Profiles). In this case, the EES 5 may identify an EAS(s) that matches all the Application Client profiles. Alternatively, the EES 5 may identify an EAS(s) that matches at least one of the provided Application Client profiles. Alternatively, the EES 5 may identify an EAS(s) on a per-Application Client profile basis. Here, the term "matching" may mean that information (e.g., characteristics, performance, state) about an EAS satisfies information or conditions regarding the Application Client contained in an Application Client profile. The selection criteria for EAS(s) may be as follows. For example, the EES 5 may identify an EAS(s) that matches all the information elements contained in the Application Client profile. Alternatively, the EES 5 may identify an EAS(s) that matches all the information elements in the Application Client profile except the "List of EASs" and that matches at least one item in the "List of EASs". Alternatively, the EES 5 may identify an EAS(s) that matches at least one information element contained in the Application Client profile.

Additionally or alternatively, the List of Edge Application Server characteristics contained in the EAS discovery filters may indicate multiple items. Each item in the list indicates a set of one or more characteristics (e.g., any combination of EAS type, EAS schedule, EAS Geographical Service Area, EAS Topological Service Area, Service continuity support, and EAS status). The EES 5 may identify an EAS(s) that matches all the items on this list. Alternatively, the ECS 7 may identify an EAS(s) that matches at least one item on the list. Here, the term "matching" may mean that information (e.g., characteristics, performance, status) about an EAS satisfies information or conditions about an Edge Application Server included in the List of Edge Application Server characteristics. The selection criteria for EAS(s) may be as follows. The EES 5 may identify an EAS(s) that matches all of the information elements included in the List of Edge Application Server characteristics. Alternatively, it may identify an EAS(s) that matches at least one information element contained in the List of Edge Application Server characteristics.

If the EAS discovery filters include both List of Application Client characteristics and List of Edge Application Server characteristics, the EES 5 may identify an EAS(s) that matches both of these. For example, the EES 5 may identify an EAS(s) that matches all the Application Client profiles in the List of Application Client characteristics and also matches the List of Edge Application Server characteristics. Alternatively, the EES 5 may identify an EAS(s) that matches one of the provided Application Client profiles and also matches the List of Edge Application Server characteristics. Alternatively, the EES 5 may identify an EAS(s) that matches at least one of these.

The selection criteria concerning the UE location for the selection of EAS(s) by the EES 5 may require that the location of the UE 1 be within an EDN service area, EES service area, or EAS service area. The EAS service area may be a topological service area (e.g., a Cell ID(s), or TAI(s)) or may be a geographic service area. The EAS service area may be the same as or a subset of the EDN service area. The EAS service area may be the same as or a subset of the EES service area.

Other factors considered in the registration verification of EAS(s) by the EES 5 may include at least one of the following: security requirements, the location of the UE 1, Application Client Profile(s) provided by the EEC 2, or the operational status of a second server (i.e., the EAS).

Upon successfully identifying a second server that meets the selection criteria (YES in step 203), the procedure proceeds to step 204. In step 204, the first server (i.e., ECS 7 or EES 5) sends information on the second server (e.g., EES, EAS, T-EES, or T-EAS) identified in step 203 to the requesting entity (i.e., EEC 2 or S-EES).

On the other hand, in response to a failure to identify a second server that meets the selection criteria (NO in step 203), the procedure proceeds to step 205. In step 205, the first server (i.e., ECS 7 or EES 5) responds to the request with a rejection or error message (hereafter sometimes simply referred to as a rejection message). The first server may indicate that the request is rejected or failed by including a failure cause, cause value, or error in a response message to the requesting entity. Note that "responding to the request with a rejection message" above means a response in the service provisioning procedure or EAS discovery procedure based on the Request/Response model. In contrast, in the service provisioning procedure or EAS discovery procedure based on the subscribe-notify model, the first server notifies the requesting entity of a rejection message instead of responding to the request with a rejection message. The error message may be a response message containing a failure cause.

According to the operation of the first server described above, the first server can identify, discover, select, or determine a preferred or suitable second server while considering at least the congestion state of the second server.

If the requesting entity is the EEC 2 and receives a rejection message in a service provisioning procedure, the requesting entity (EEC 2) may operate as follows. The EEC 2 aborts the service provisioning procedure. Alternatively, the EEC 2 may retransmit the service provisioning request. If the number of retransmissions reaches a given limit, the EEC 2 aborts the service provisioning procedure. The EEC 2 may inform the AC 3 of the failure cause (or error). The EEC 2 may map the failure cause (or error) to an AC-specific failure cause (or error). Alternatively, the EEC 2 may transparently forward the failure cause (or error) to the AC 3.

If the requesting entity is the EEC 2 and receives a rejection message in a service provisioning procedure based on the Subscribe-Notify model, the requesting entity (EEC 2) may operate as follows. The EEC 2 aborts the service provisioning procedure. Alternatively, the EEC 2 may send a service provisioning subscription update request to the ECS 7. The EEC 2 may inform the AC 3 of the failure cause (or error). The EEC 2 may map the failure cause (or error) to an AC-specific failure cause (or error). Alternatively, the EEC 2 may transparently forward the failure cause (or error) to the AC 3.

If the requesting entity is the EEC 2 and receives a rejection message in an EAS discovery procedure, the requesting entity (EEC 2) may operate as follows. The EEC 2 aborts the EAS discovery procedure. Alternatively, the EEC 2 may retransmit the EAS discovery request. If the number of retransmissions reaches a given limit, the EEC 2 aborts the EAS discovery procedure. The EEC 2 may inform the AC 3 of the failure cause (or error). The EEC 2 may map the failure cause (or error) to an AC-specific failure cause (or error). Alternatively, the EEC 2 may transparently forward the failure cause (or error) to the AC 3. Alternatively, the EEC 2 may suppress the transmission of EAS discovery based on the failure cause in the rejection message.

If the requesting entity is the EEC 2 and receives a rejection message in an EAS discovery procedure based on the Subscribe-Notify model, the requesting entity (EEC 2) may operate as follows. The EEC 2 aborts the EAS discovery procedure. Alternatively, the EEC 2 may send an EAS discovery subscription update request to the EES 5. The EEC 2 may inform the AC 3 of the failure cause (or error). The EEC 2 may map the failure cause (or error) to an AC-specific failure cause (or error). Alternatively, the EEC 2 may transparently forward the failure cause (or error) to the AC 3. Alternatively, the EEC 2 may suppress the transmission of EAS discovery based on the failure cause in the rejection message.

If the requesting entity is the EEC 2 and receives a rejection message in a registration procedure of the EEC 2, the requesting entity (EEC 2) may operate as follows. The EEC 2 aborts the registration procedure. Alternatively, the EEC 2 may retransmit the EEC registration request. If the number of retransmissions reaches a given limit, the EEC 2 aborts the registration procedure. Alternatively, the EEC 2 may send an EEC registration update request. Alternatively, the EEC 2 may send an EEC de-registration request. Alternatively, the EEC 2 may inform the AC 3 of the failure cause (or error). The EEC 2 may map the failure cause (or error) to an AC-specific failure cause (or error). Alternatively, the EEC 2 may transparently forward the failure cause (or error) to the AC 3. Alternatively, the EEC 2 may suppress the transmission of an EEC registration request or EEC registration update request based on the failure cause in the rejection message.

The first server may differentiate a rejection message sent to the requesting entity when the second server is congested from a rejection message sent when the second server cannot be discovered. In one example, the failure cause value set in the rejection message when the second server is congested may be different from that set in the rejection message when the second server cannot be discovered. This allows the requesting entity to distinguish between the type of rejection message (or type of failure cause). Furthermore, it allows the requesting entity to perform different actions depending on the type of rejection message (or type of failure cause).

The following explains specific examples of rejection messages in the case where the first server is the ECS 7. When the ECS 7 responds to a request with a rejection message based on a selection criterion regarding the UE location, the rejection message may indicate a requesting entity-dependent error or condition, specifically "HTTP Status code 403 Forbidden". The failure cause included in this rejection message may be a value indicating that the acquisition of edge configuration information is not allowed or accepted, or a value indicating that the request is not allowed or accepted at the UE's location, specifically "NOT_AUTHORIZED". In other examples, the ECS 7 may respond with a rejection using a NAS message. Specifically, the NAS message may be a PDU Session Establishment Reject message, a PDU Session Establishment Accept message, a Registration Reject message, or a Registration Accept message. The failure cause included in this rejection message may be a cause value indicating that the rejection is based on a selection criterion regarding the UE location, or it may be a value indicating an error based on a selection criterion regarding the UE location. The rejection based on a selection criterion regarding the UE location may be a rejection due to the fact that an EES matching the Application Client profiles can be identified, but does not meet the selection criterion regarding the location. In other words, this may be an error due to the UE location being outside the locations eligible to receive edge configuration information. If the response to the request indicates a rejection based on the selection criterion regarding the UE location, the EEC 2 may suppress the transmission of service provisioning requests. Furthermore, the EEC 2 may suppress sending service provisioning requests until the UE location is changed. In other words, the EEC 2 may suppress sending a service provisioning request containing the same resource or information as the rejected request until the UE location is changed.

When the ECS 7 responds to a request with a rejection message based on a selection criterion regarding Application Client profiles (i.e., if a second server cannot be discovered), the rejection message may indicate a requesting entity-dependent error or condition, specifically "HTTP Status code 404 Not Found". The failure cause included in this rejection message may be a value indicating that an EES cannot be discovered or that the information or conditions contained in the Application Client profiles cannot be met, specifically "RESOURCE_NOT_FOUND". In other examples, the ECS 7 may respond with a rejection using a NAS message. Specifically, the NAS message may be a PDU Session Establishment Reject message, a PDU Session Establishment Accept message, a Registration Reject message, or a Registration Accept message. The failure cause included in the rejection message may be a cause value indicating that the rejection is based on a selection criterion regarding Application Client profiles, or it may be a value indicating an error based on a selection criterion regarding Application Client profiles. The rejection based on a selection criterion regarding Application Client profiles may be a rejection when no EES(s) matching the Application Client profiles can be discovered. Alternatively, this may be a rejection when an EAS(s) matching the Application Client profiles can be identified, but the EAS(s) is not in an operational state (e.g., the EAS(s) is in a congestion state, or the EAS(s) is under maintenance). Here, the failure cause when the EAS(s) is not operational may be a value indicating that the failure is due to the operational status of the EAS(s), specifically "APPLICATION_NOT_FOUND" instead of "RESOURCE_NOT_FOUND" as described above. If the response to the request indicates a rejection based on the selection criterion regarding the Application Client profiles, the EEC 2 may suppress the transmission of service provisioning requests. Furthermore, the EEC 2 may suppress sending service provisioning requests until the Application Client profiles or part of the information contained in them is changed. In other words, the EEC 2 may suppress sending a service provisioning request that contains the same resource or information as the rejected request until the Application Client profiles or part of the information contained in them is changed.

When the ECS 7 responds to a request with a rejection message based on a selection criterion regarding the operational status of an EES (i.e., if the EES is in a congestion state or is under maintenance), the rejection message may indicate a server-dependent error or condition, specifically "HTTP Status code 503 Service Unavailable". In other examples, the ECS 7 may respond with a rejection using a NAS message. Specifically, the NAS message may be a PDU Session Establishment Reject message, a PDU Session Establishment Accept message, a Registration Reject message, or a Registration Accept message. The failure cause included in this rejection message may be a cause value indicating that the rejection is based on a selection criterion regarding the operational status of an EES, or it may be a value indicating an error based on a selection criterion regarding the operational status of an EES.

When responding to a rejection using a NAS message, the ECS 7 responds by utilizing an API provided by the 3GPP core network 8. The API may be exposed by an NEF to the ECS 7 acting as an Application Function (AF) and provide access to 3GPP core network capabilities of the PCF, Session Management Function (SMF), or AMF.

The following explains specific examples of rejection messages in the case where the first server is an EES 5. When the EES 5 responds to a request with a rejection message based on a selection criterion regarding the UE location, the rejection message may indicate a requesting entity-dependent error or condition, specifically "HTTP Status code 403 Forbidden". The failure cause included in this rejection message may be a value indicating that the acquisition of EAS information is not allowed or accepted, or a value indicating that the request is not allowed or accepted at the UE's location, specifically "NOT_AUTHORIZED". The rejection based on a selection criterion regarding the UE location may be a rejection due to the fact that an EAS(s) matching the EAS discovery filters can be identified, but does not meet the selection criterion regarding the location. In other words, this may be an error due to the UE location being outside the locations eligible to receive EAS information. If the response to the request indicates a rejection based on the selection criterion regarding the UE location, the EEC 2 may suppress the transmission of EAS discovery requests. Furthermore, the EEC 2 may suppress sending EAS discovery requests until the UE location is changed. In other words, the EEC 2 may suppress sending an EAS discovery request containing the same resource or information as the rejected request until the UE location is changed.

When the EES 5 responds to a request with a rejection message based on a selection criterion regarding the UE location in the registration verification, the rejection message may indicate a requesting entity-dependent error or condition, specifically "HTTP Status code 403 Forbidden". The failure cause included in the rejection message may be a value indicating that registration at the UE location is not accepted or allowed, specifically
"NOT_AUTHORIZED". The rejection based on a selection criterion regarding the UE location may be a rejection due to the fact that an EAS(s) matching the Application Client profiles can be identified, but these do not meet the selection criterion regarding location. This may be an error due to the UE location being outside the locations where registration is allowed considering the EAS in question. If the response to the request is a rejection based on the UE location, the EEC 2 may suppress the transmission of EEC registration requests or EEC registration update requests. Furthermore, the EEC 2 may suppress the transmission of EEC registration requests or EEC registration update requests until the UE location is changed. In other words, the EEC 2 may suppress the transmission of an EEC registration request or EEC registration update request that contains the same resource or information as the rejected request until the UE location is changed.

When the EES 5 responds to a request with a rejection message based on a selection criterion regarding EAS discovery filters (i.e., if the second server is not discovered), the rejection message may indicate a requesting entity-dependent error or condition, specifically "HTTP Status code 404 Not Found". The failure cause included in this rejection message may be a value indicating that an EAS cannot be discovered, or a value indicating that the information or conditions contained in the EAS discovery filters cannot be met, specifically "RESOURCE_NOT_FOUND". The rejection based on a selection criterion regarding EAS discovery filters may be a rejection when no EAS(s) matching the EAS discovery filters can be discovered. If the response to the request indicates a rejection based on the selection criterion regarding the EAS discovery filters, the EEC 2 may suppress the transmission of EAS discovery requests. Furthermore, the EEC 2 may suppress sending EAS discovery requests until the EAS discovery filters or part of the information contained in them is changed. In other words, the EEC 2 may suppress sending an EAS discovery request that contains the same resource or information as the rejected request until the EAS discovery filters or part of the information contained in them is changed.

When the EES 5 responds to a request with a rejection message based on a selection criterion regarding Application Client profiles in the registration verification (i.e., when a second server cannot be discovered), the rejection message may indicate a requesting entity-dependent error or condition, specifically "HTTP Status code 404 Not Found". The failure cause included in this rejection message may be a value indicating that the information or conditions contained in the Application Client profiles cannot be met, specifically "RESOURCE_NOT_FOUND". The rejection based on a selection criterion regarding Application Client profiles here may be a rejection when no EAS(s) matching the Application Client profiles can be discovered. If the response to the request indicates a rejection based on a verification criterion regarding Application Client profiles, the EEC 2 may suppress the transmission of EEC registration requests or EEC registration update requests. Furthermore, the EEC 2 may suppress the transmission of EEC registration requests or EEC registration update requests until the Application Client profiles or part of the information contained in them is changed. In other words, the EEC 2 may suppress the transmission of an EEC registration request or EEC registration update request containing the same resources or information as the rejected request until the Application Client profiles or part of the information contained in them is changed.

If the EES5 responds to a request with a rejection message based on a selection criterion regarding the operational status of EASs (i.e., the second server is congested or under maintenance), the rejection message may indicate a server-dependent error or condition, specifically "HTTP Status code 503 Service Unavailable".

If the requesting entity is the EEC 2 and receives a rejection message in a service provisioning procedure, the requesting entity (EEC 2) may operate as follows. If the rejection message is due to congestion in a second server (i.e., EES), then the EEC 2 aborts the service provisioning procedure without resending a service provisioning request. On the other hand, if the rejection message is due to the fact that a second server (i.e., EES) cannot be discovered, then the EEC 2 resends a service provisioning request.

If the requesting entity is the EEC 2 and receives a rejection message in an EAS discovery procedure, the requesting entity (EEC 2) may operate as follows. If the rejection message is due to congestion at a second server (i.e., EAS), then the EEC 2 aborts the EAS discovery procedure without resending an EAS discovery request. On the other hand, if the rejection message is due to the fact that a second server (i.e., EAS) cannot be discovered, then the EEC 2 resends an EAS discovery request.

### Second Example Embodiment

This example embodiment provides a modification of the operations of the first server and requesting entity described in the first example embodiment. An example of the network architecture according to this example embodiment is the same as the example described with reference to Fig. 1.

In this example embodiment, if a request is rejected, the first server indicates explicitly or implicitly in a rejection message that the requesting entity will need to perform a backoff before sending the next request. In one example, if a request is rejected because the second server is in a congestion state (or high load), the first server indicates explicitly or implicitly in a rejection message that the requesting entity should perform a backoff before sending the next request. Specifically, the first server may include in the rejection message a failure cause indicating that the second server is congested. The failure cause implies that a backoff is required. Additionally or alternatively, the first server may include in the rejection message a value indicating a specific backoff time, a maximum backoff time, or a parameter for deriving any of these. The backoff time may be referred to as a backoff period or a backoff window.

If the rejection message does not indicate that a backoff is required, the requesting entity may send the next request without backoff. For example, the requesting entity may resend a request message, including the missing information indicated by the failure cause contained in the received rejection message.

In contrast, if the rejection message explicitly or implicitly indicates that a backoff is required, the requesting entity performs a backoff before sending the next request. In other words, the requesting entity delays sending the next request until at least the backoff time has elapsed. The backoff time may be specified by the first server or derived by the requesting entity. The requesting entity may determine a random backoff time using the maximum backoff time as an upper limit.

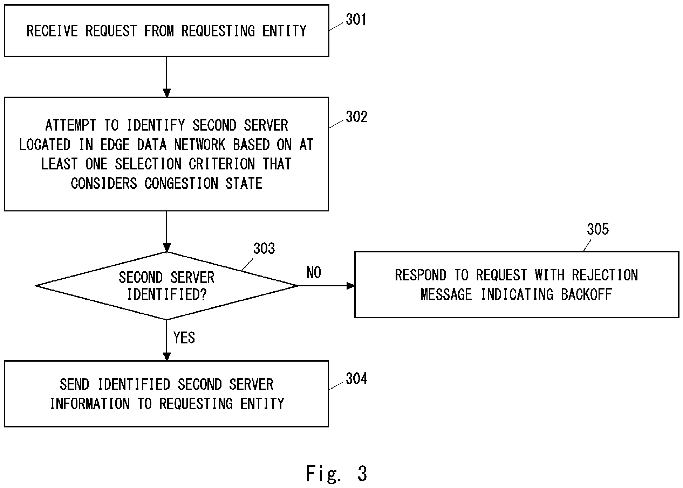

Fig. 3 is a flowchart showing an example of the operation of a first server according to this example embodiment. The first server attempts to identify (or discover, or select, or determine) a preferred or suitable edge server deployed in the EDN 4. In one example, the first server may be the ECS 7, which may attempt to identify one or more EESs in response to a request from the EEC 2 of the UE 1. Alternatively, the first server may be the ECS 7 and may attempt to identify a target EES (T-EES) upon request from a source EES (S-EES) during edge application mobility (or application context relocation). In another example, the first server may be an EES 5, which may attempt to identify one or more EASs in response to a request from the EEC 2 of the UE 1. Alternatively, the first server may be an EES 5 (T-EES) and may attempt to identify a target EAS (T-EAS) upon request from an S-EES during edge application mobility (or application context relocation).

Steps 301-304 are similar to steps 201-204 in Fig. 2. In step 305, the first server (i.e., ECS 7 or EES 5) responds to the request with a rejection message. The rejection message explicitly or implicitly indicates that a backoff is required before the sending of the next request. Specifically, if the request is rejected because the second server is in a congestion state (or high load), then the first server may indicate the need for a backoff with the rejection message.

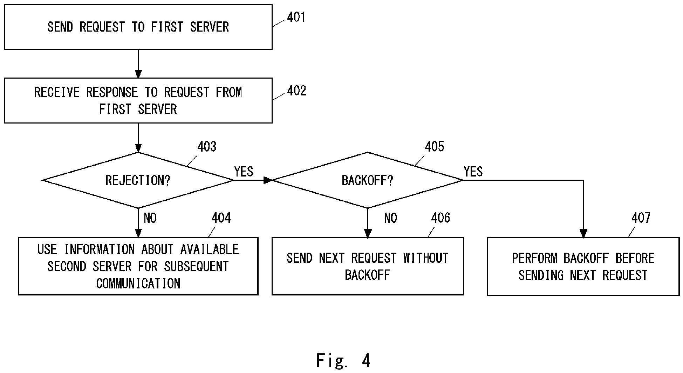

Fig. 4 shows a flowchart of an example of the operation of the requesting entity according to this example embodiment. In the case of EES(s) selection (or decision, or discovery, or identification), the requesting entity may be the EEC 2, or it may be an S-EES (e.g., EES 5) in edge application mobility. In the case of EAS(s) selection (or decision, or discovery, or identification), the requesting entity may be the EEC 2 or may be an S-EES in Edge Application Mobility.

In step 401, the requesting entity sends a request to the first server (e.g., ECS 7 or EES 5). In step 402, the requesting entity receives a response from the first server.

If the response of step 402 is not a rejection message (NO in step 403), the procedure proceeds to step 404. In step 404, the requesting entity (e.g., EEC 2, or S-EES) retrieves from the response message information on a second server (e.g., EES, EAS, T-EES, or T-EAS) that is deployed in the EDN 4 and meets at least one selection criteria. The requesting entity uses the information on the second server for a communication of providing services in the EDN 4. For example, if the requesting entity is the EEC 2 in the case of selection (or determination, or discovery, or identification) of an EES(s), then the EEC 2 may utilize the received information about the second server (i.e., EES) in a subsequent EAS discovery. Alternatively, if the requesting entity is the EEC 2 in the case of selection (or determination, or discovery, or identification) of an EAS(s), then the EEC 2 may use the received information (e.g., endpoint information) about the second server (i.e., the EES) for the routing of application data traffic to the EAS.

In contrast, if the response of step 402 is a rejection message (YES in step 403), the procedure proceeds to step 405. In step 405, the requesting entity determines whether the rejection message indicates that a backoff is required. If no backoff is required (NO in step 405), the requesting entity may send the next request without backoff (step 406). If a backoff is required (YES in step 405), the requesting entity performs the backoff before sending the next request.

According to the operations of the first server and requesting entity described above, when a request is rejected, the first server can delay the transmission of the next request by the requesting entity. In particular, when a request is rejected due to congestion in the second server, delaying the transmission of the next request by the requesting entity allows the congestion in the second server to be resolved or reduced.

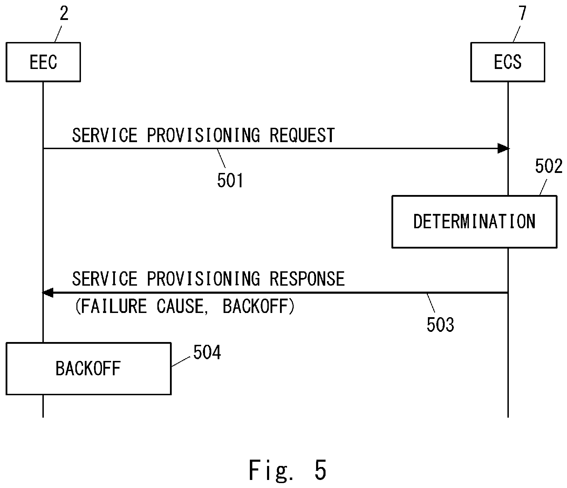

The following provides some specific examples of the implementation of the first server and requesting entity operations described above, with reference to Figs. 5 to 8. Fig. 5 shows an example of the operations of the EEC 2 and ECS 7 in a service provisioning procedure based on the Request/Response model. The EEC 2 in Fig. 5 corresponds to the requesting entity described above, while the ECS 7 in Fig. 5 corresponds to the first server described above. In step 501, the EEC 2 sends a service provisioning request to the ECS 7 as the request described above.

In step 502, the ECS 7 attempts to identify at least one EES that meets at least one selection criterion. The at least one selection criterion considers the congestion state of an EES. In addition, the at least one selection criterion may consider the UE location, or at least one Application Client profile provided by the EEC 2 via the request of step 501, or both. The at least one selection criterion may consider other factors, e.g., UE-specific service information in the ECS 7, or ECSP policy. As described with reference to Fig. 3 (step 305), the ECS 7 rejects the request from the EEC 2 if it cannot identify an EES that meets the at least one selection criterion.

In step 503, the ECS 7 responds to the request from the EEC 2 with a service provisioning response. Fig. 5 shows a case in which the request by the EEC 2 is rejected. Accordingly, the response includes a failure cause. In addition, if the EES is in a congestion state (or a high load state), the response explicitly or implicitly indicates that a backoff is required. If the response explicitly indicates that a backoff is required, a backoff timer value may be further provided in the response in step 503. In step 504, the EEC 2 delays sending the next request until at least the backoff time has elapsed.

The information explicitly or implicitly indicating that a backoff is required may be configured per EDN connection information provided in the service provisioning response, or per EES(s) provided in the EDN connection information. The EDN connection information is information for the UE 1 to establish a connection with the EDN 4.

In step 503 of Fig. 5, there is a case where the request from the EEC 2 is accepted although the EES 5 is congested. In this case, the service provisioning response explicitly or implicitly indicates that a backoff is required, but does not include a failure cause. Since the response does not contain a failure cause, the response indicates that the EEC 2's request has been accepted and that the service provisioning is being made from the ECS 7 to the EEC 2. Thus, such a response may be treated as a message when the request is accepted (SUCCESS), rather than when the request is rejected (FAILURE), although it explicitly or implicitly indicates that a backoff is required. In this case, in step 504, the EEC 2 delays the transmission of an EDGE-1 message(s) to the EES(s) indicated as congested from the ECS 7, considering the backoff timer value and other factors. These EDGE-1 message(s) include at least one of the following: Edge Enabler Client registration request, Edge Enabler Client registration update request, Edge Enabler Client de-registration Edge Enabler Client de-registration request, Edge Enabler Client de-registration request, or Edge Application Server discovery request. The information indicating backoff in this case may be referred to, for example, as deferred request information or slow processing notification.

The service provisioning procedure shown in Fig. 5 may be modified as appropriate. In particular, the service provisioning procedure may follow the Subscribe-Notify model instead of the Request-Response model. The signaling between the EEC 2 and ECS 7 shown in Fig. 5 may be performed via a user plane connection (e.g., data radio bearer and one or more user plane tunnels) provided by the 3GPP core network 8 and the access network. Alternatively, the signaling may be performed through a control plane connection provided by the 3GPP core network 8 and the access network. This control plane connection includes a Non-Access Stratum (NAS) signaling connection between the UE 1 and a control plane entity (e.g., AMF or Mobility Management Entity (MME)) in the 3GPP core network 8.

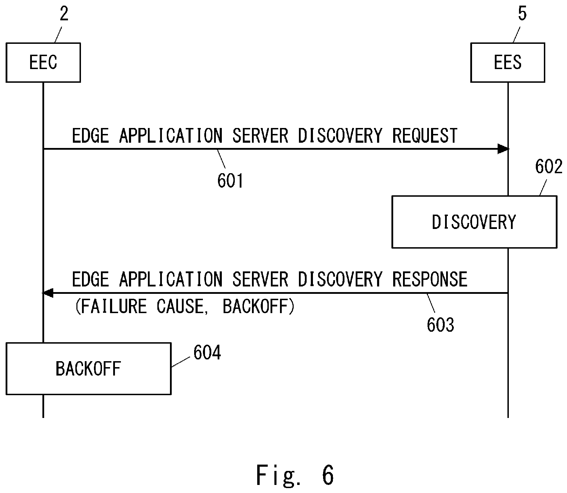

Fig. 6 shows an example of the operations of the EEC 2 and EES 5 in an EAS discovery procedure based on the Request/Response model. The EEC 2 in Fig. 6 corresponds to the requesting entity described above, while the EES 5 in Fig. 6 corresponds to the first server described above. In step 601, the EEC 2 sends an Edge Application Server discovery request to the EES 5 as the request described above.

In step 602, the EES 5 attempts to identify at least one EAS that meets at least one selection criterion. The at least one selection criterion considers the congestion state of an EAS. In addition, the at least one selection criterion may consider the UE location, or EAS discovery filters provided by the EEC 2 via the request of step 601, or both. The at least one selection criterion may consider other factors, e.g., UE-specific service information in the EES 5, or ECSP policy. As described with reference to Fig. 3 (step 305), the EES 5 rejects the request from the EEC 2 if it cannot identify an EAS that meets the at least one selection criterion.

In step 603, the EES 5 responds to the request from the EEC 2 with an Edge Application Server discovery response. Fig. 6 shows a case in which the request by the EEC 2 is rejected. Accordingly, the response includes a failure cause. In addition, if the EAS is in a congestion state (or a high load state), the response explicitly or implicitly indicates that a backoff is required. If the response explicitly indicates that a backoff is required, a backoff timer value may be further provided in the response in step 603. In step 604, the EEC 2 delays sending the next request until at least the backoff time has elapsed.

The information explicitly or implicitly indicating that a backoff is required may be configured per EAS profile provided in the Edge Application Server discovery response.

In step 603 of Fig. 6, there is a case where the request from the EEC 2 is accepted although the EAS 6 is congested. In this case, the Edge Application Server discovery response explicitly or implicitly indicates that a backoff is required, but does not include a failure cause. Since the response does not contain a failure cause, the response indicates that the EEC 2's request has been accepted and that the Edge Application Server discovery is being made by the EES 5 for the EEC 2. Thus, such a response may be treated as a message when the request is accepted (SUCCESS), rather than when the request is rejected (FAILURE), although it explicitly or implicitly indicates that a backoff is required. In this case, in step 604, the EEC 2 notifies the AC(s) 3 of the information about the EAS(s) indicated as congested by the EES 5. The AC(s) 3 delays sending application data to the EAS(s) indicated as congested by the EEC 2, considering the backoff timer value and other factors. Alternatively, the AC(s) 3 may decide that normal operation of an application is no longer feasible due to congestion in the EAS(s), and may abandon starting the application. The information indicating backoff in this case may be referred to, for example, as deferred request information or slow processing notification.

The EAS discovery procedure shown in Fig. 6 may be modified as appropriate. In particular, the EAS discovery procedure may follow the Subscribe-Notify model instead of the Request-Response model. The signaling between the EEC 2 and EES 5 shown in Fig. 6 may be performed via a user plane connection (e.g., data radio bearer and one or more user plane tunnels) provided by the 3GPP core network 8 and the access network. Alternatively, the signaling may be performed through a control plane connection provided by the 3GPP core network 8 and the access network. This control plane connection includes a NAS signaling connection between the UE 1 and a control plane entity (e.g., AMF or MME) in the 3GPP core network 8.

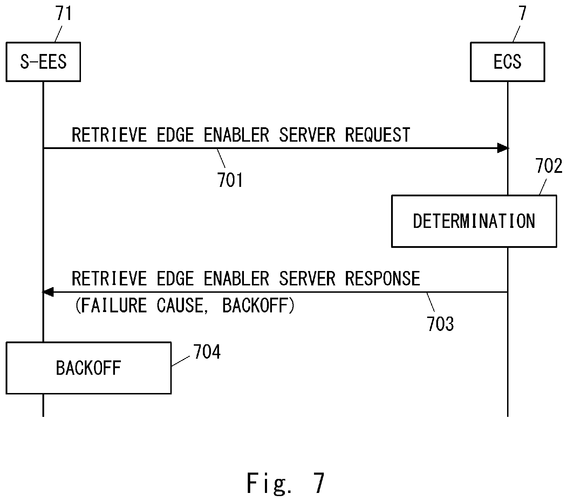

Fig. 7 shows an example of the operations of a source EES (S-EES) 71 and the ECS 7 in a Retrieve Target Edge Enabler Server procedure. The S-EES 71 in Fig. 7 corresponds to the requesting entity described above, while the ECS 7 in Fig. 7 corresponds to the first server described above. In step 701, the S-EES 71 sends a Retrieve Edge Enabler Server request to the ECS 7.

In step 702, the ECS 7 attempts to identify at least one target EES (T-EES) that meets at least one selection criterion. The at least one selection criterion considers the congestion state of a T-EES. In addition, the at least one selection criterion may consider one or both of the UE location and the target DNAI. The at least one selection criterion may consider other factors, e.g., UE-specific service information in the ECS 7, or ECSP policy. As described with reference to Fig. 3 (step 305), the ECS 7 rejects the request from the S-EES 71 if it cannot identify a T-EES that meets the at least one selection criterion.

In step 703, the ECS 7 sends a Retrieve Edge Enabler Server response to the S-EES 71. Fig. 7 shows a case in which the request by the S-EES 71 is rejected. Accordingly, the response contains a failure cause. Furthermore, when the T-EES is in a congestion state (or in a high load state), the response explicitly or implicitly indicates that a backoff is required. If the response explicitly indicates that a backoff is required, a further backoff timer value may be further provided in the response in step 703. In step 704, the S-EES 71 delays sending the next request until at least the backoff time has elapsed.

The information that explicitly or implicitly indicates that a backoff is required may be configured per target Edge Enabler Server(s) information provided in the Retrieve Edge Enabler Server response.

In step 703 of Fig. 7, there is a case where the request from the S-EES 71 is accepted although the EAS(s) is congested. In this case, the Retrieve Edge Enabler Server response explicitly or implicitly indicates that a backoff is required, but does not include a failure cause. Since the response does not contain a failure cause, the response indicates that the S-EES 71's request has been accepted and that the Retrieve Edge Enabler Server is being performed by the ECS 7 for the EEC 2. Thus, such a response may be treated as a message when the request is accepted (SUCCESS), rather than when the request is rejected (FAILURE), although it explicitly or implicitly indicates that a backoff is required. In this case, in step 704, the S-EES 71 delays an EDGE-9 message(s), such as a Target EAS discovery request, to the EES(s) indicated as congested from the ECS 7, considering the backoff timer value and other factors. The information indicating backoff in this case may be referred to, for example, as deferred request information or slow processing notification.

The Retrieve Target Edge Enabler Server procedure shown in Fig. 7 may be modified as appropriate. In particular, the Retrieve Target Edge Enabler Server procedure may follow the Subscribe-Notify model instead of the Request-Response model.

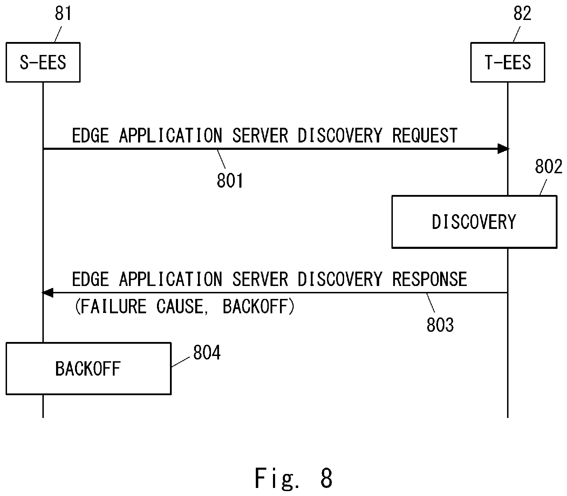

Fig. 8 shows an example of the operations of a source EES (S-EES) 81 and a target EES (T-EES) 82 in a Target EAS discovery procedure during an application context relocation determined or triggered by the source EES (S-EES). The S-EES 81 in Fig. 8 corresponds to the requesting entity described above, while the T-EES 82 in Fig. 8 corresponds to the first server described above. In step 801, the S-EES 81 sends an Edge Application Server discovery request to the T-EES 82.

In step 802, the T-EES 82 attempts to identify at least one target EAS (T-EAS) that meets at least one selection criterion. The at least one selection criterion considers the congestion state of a T-EAS. In addition, the at least one selection criterion may consider an EAS discovery filter matching the EAS profile of the S-EES 81, or consider the target DNAI, or consider both of them. The at least one selection criterion may consider other factors, e.g., UE-specific service information in the T-EES 82, or ECSP policy. As described with reference to Fig. 3 (step 305), the T-EES 82 rejects the request from the S-EES 81 if it cannot identify a T-EAS that meets the at least one selection criterion.

In step 803, the T-EES 82 responds to the request from the S-EES 81 with an Edge Application Server discovery response. Fig. 8 shows a case in which the request by the S-EES 81 is rejected. Accordingly, the response includes a failure cause. Furthermore, when the request is rejected because the T-EAS is congested (or high load state), the response explicitly or implicitly indicates that a backoff is required. If it explicitly indicates that a backoff is required, a backoff timer value may be configured in step 803. In step 804, the S-EES 81 delays sending the next request until at least the backoff time has elapsed.

### Third Example Embodiment

This embodiment provides another example of the behaviors of the first server and the requesting entity. An example of the network architecture according to this example embodiment is the same as the example described with reference to Fig. 1.

In this example embodiment, the first server may differentiate a rejection message sent to the requesting entity when the second server is not in an operational state from a rejection message sent when the second server cannot be discovered. In one example, the failure cause value set in the rejection message when the second server is not operational may be different from that set in the rejection message when the second server cannot be discovered. This allows the requesting entity to distinguish between the type of rejection message (or type of failure cause). Furthermore, it allows the requesting entity to perform different actions depending on the type of rejection message (or type of failure cause).

If the requesting entity is the EEC 2 and receives a rejection message in a service provisioning procedure, the requesting entity (EEC 2) may operate as follows. If the rejection message is due to the fact that a second server (i.e., EES) is not operational, then the EEC 2 aborts the service provisioning procedure without resending a service provisioning request. On the other hand, if the rejection message is due to the fact that a second server (i.e., EES) cannot be discovered, then the EEC 2 resends a service provisioning request.

If the requesting entity is the EEC 2 and receives a rejection message in an EAS discovery procedure, the requesting entity (EEC 2) may operate as follows. If the rejection message is due to the fact that a second server (i.e., EAS) is not operational, then the EEC 2 aborts the EAS discovery procedure without resending an EAS discovery request. On the other hand, if the rejection message is due to the fact that a second server (i.e., EAS) cannot be discovered, then the EEC 2 resends an EAS discovery request.

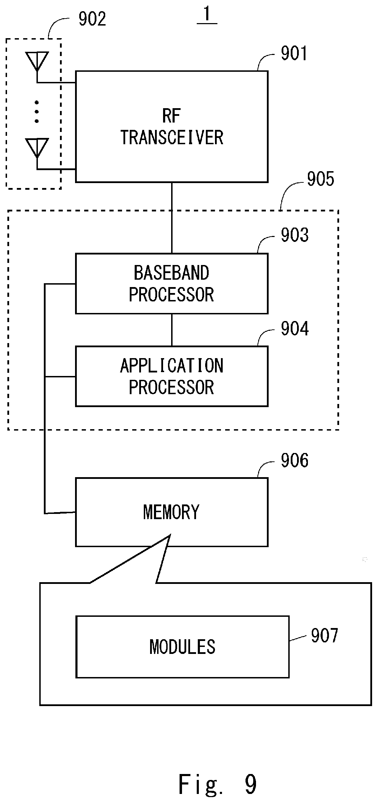

The following provides configuration examples of the UE 1, EES 5, EAS 6, and ECS 7 according to the above-described example embodiments. Fig. 9 is a block diagram showing an example configuration of the UE 1. A Radio Frequency (RF) transceiver 901 performs analog RF signal processing to communicate with RAN nodes. The RF transceiver 901 may include a plurality of transceivers. The analog RF signal processing performed by the RF transceiver 901 includes frequency up-conversion, frequency down-conversion, and amplification. The RF transceiver 901 is coupled to an antenna array 902 and a baseband processor 903. The RF transceiver 901 receives modulated symbol data (or OFDM symbol data) from the baseband processor 903, generates a transmission RF signal, and supplies the transmission RF signal to the antenna array 902. Further, the RF transceiver 901 generates a baseband reception signal based on a reception RF signal received by the antenna array 902 and supplies the baseband reception signal to the baseband processor 903. The RF transceiver 901 may include an analog beamformer circuit for beam forming. The analog beamformer circuit includes, for example, a plurality of phase shifters and a plurality of power amplifiers.

The baseband processor 903 performs digital baseband signal processing (i.e., data-plane processing) and control-plane processing for radio communication. The digital baseband signal processing includes (a) data compression/decompression, (b) data segmentation/concatenation, (c) composition/decomposition of a transmission format (i.e., transmission frame) (d) channel coding/decoding, (e) modulation (i.e., symbol mapping)/demodulation, and (f) generation of OFDM symbol data (i.e., baseband OFDM signal) by Inverse Fast Fourier Transform (IFFT). Meanwhile, the control-plane processing includes communication management of layer 1 (e.g., transmission power control), layer 2 (e.g., radio resource management and hybrid automatic repeat request (HARQ) processing), and layer 3 (e.g., signaling regarding attach, mobility, and call management).

The digital baseband signal processing by the baseband processor 903 may include, for example, signal processing of Service Data Adaptation Protocol (SDAP), Packet Data Convergence Protocol (PDCP), Radio Link Control (RLC), Medium Access Control (MAC), and Physical (PHY) layers. The control-plane processing performed by the baseband processor 903 may include processing of Non-Access Stratum (NAS) protocols, Radio Resource Control (RRC) protocols, MAC Control Elements (CEs), and Downlink Control Information (DCIs).

The baseband processor 903 may perform Multiple Input Multiple Output (MIMO) encoding and pre-coding for beam forming.

The baseband processor 903 may include a modem processor (e.g., Digital Signal Processor (DSP)) that performs the digital baseband signal processing and a protocol stack processor (e.g., a Central Processing Unit (CPU) or a Micro Processing Unit (MPU)) that performs the control-plane processing. In this case, the protocol stack processor, which performs the control-plane processing, may be integrated with an application processor 904 described below.

The application processor 904 is also referred to as a CPU, an MPU, a microprocessor, or a processor core. The application processor 904 may include a plurality of processors (or processor cores). The application processor 904 loads a system software program (Operating System (OS)) and various application programs (e.g., a call application, a WEB browser, a mailer, a camera operation application, and a music player application) from a memory 906 or from another memory not shown and executes these programs, thereby providing various functions of the UE 1.

In some implementations, as represented by a dashed line (905) in Fig. 9, the baseband processor 903 and the application processor 904 may be integrated on a single chip. In other words, the baseband processor 903 and the application processor 904 may be implemented in a single System on Chip (SoC) device 905. The SoC device may be referred to as a Large-Scale Integration (LSI) or a chipset.

The memory 906 is a volatile memory, a non-volatile memory, or a combination thereof. The memory 906 may include a plurality of memory devices that are physically independent from each other. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 906 may include, for example, an external memory device that can be accessed from the baseband processor 903, the application processor 904, and the SoC 905. The memory 906 may include an internal memory device that is integrated in the baseband processor 903, the application processor 904, or the SoC 905. Further, the memory 906 may include a memory in a Universal Integrated Circuit Card (UICC).

The memory 906 may store one or more software modules (computer programs) 907 including instructions and data to perform the processing by the UE 1 described in the above example embodiments. In some implementations, the baseband processor 903 or the application processor 904 may load these software modules 907 from the memory 906 and execute the loaded software modules, thereby performing the processing of the UE 1 described in the above example embodiments with reference to the drawings.

The control-plane processing and operations performed by the UE 1 described in the above example embodiments can be achieved by elements other than the RF transceiver 901 and the antenna array 902, i.e., achieved by the memory 906, which stores the software modules 907, and one or both of the baseband processor 903 and the application processor 904.

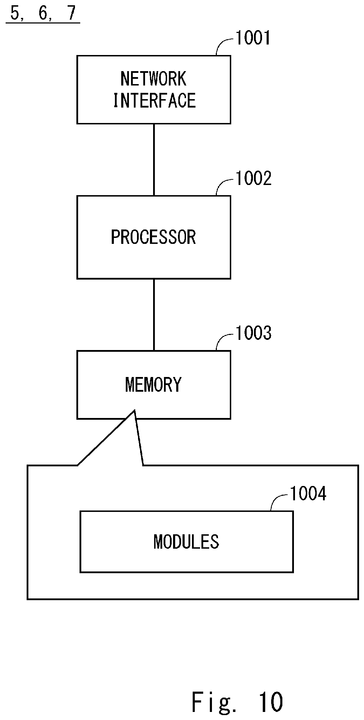

Fig. 10 shows an example configuration of the EES 5. The EAS 6 and ECS 7 may also have the configuration as shown in Fig. 10. Referring to Fig. 10, the EES 5 (or EAS 6, or ECS 7) includes a network interface 1001, a processor 1002, and a memory 1003. The network interface 1001 is used to communicate with other network functions (NFs) or nodes. The network interface 1001 may include, for example, a network interface card (NIC) conforming to the IEEE 802.3 series.

The processor 1002 may be, for example, a microprocessor, a Micro Processing Unit (MPU), or a Central Processing Unit (CPU). The processor 1002 may include a plurality of processors.

The memory 1003 is composed of a volatile memory and a nonvolatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1003 may include a storage located apart from the processor 1002. In this case, the processor 1002 may access the memory 1003 via the network interface 1001 or an I/O interface not shown.

The memory 1003 may store one or more software modules (computer programs) 1004 including instructions and data to perform the processing of the EES 5 (or EAS 6, or ECS 7) described in the above example embodiments. In some implementations, the processor 1002 may be configured to load the one or more software modules 1004 from the memory 1003 and execute the loaded software modules, thereby performing the processing of the EES 5 (or EAS 6, or ECS 7) described in the above example embodiments.

As described using Figs. 9 and 10, each of the processors in the UE 1, EES 5, EAS 6, and ECS 7 according to the example embodiments described above executes one or more programs, containing a set of instructions, to cause a computer to perform an algorithm described with reference to the drawings. These programs can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). These programs may be provided to a computer using any type of transitory computer readable media. Examples of transitory computer readable media include electric signals, optical signals, and electromagnetic waves. Transitory computer readable media can provide the programs to a computer via a wired communication line (e.g., electric wires, and optical fibers) or a wireless communication line.

The User Equipment (UE) in the present disclosure is an entity to be connected to a network via a wireless interface. It should be noted that the radio terminal (UE) in the present disclosure is not limited to a dedicated communication device, and it may be any device as follows having the communication functions herein explained.

The terms "User Equipment (UE)" (as the term is used by 3GPP), "mobile station", "mobile terminal", "mobile device", and "radio terminal (wireless device)" are generally intended to be synonymous with one another. The UE may include standalone mobile stations, such as terminals, cell phones, smartphones, tablets, cellular IoT (internet of things) terminals, and IoT devices. It will be appreciated that the terms "UE" and "radio terminal" also encompass devices that remain stationary for a lengthy period of time.

A UE may, for example, be an item of equipment for production or manufacture and/or an item of energy related machinery (for example equipment or machinery such as: boilers; engines; turbines; solar panels; wind turbines; hydroelectric generators; thermal power generators; nuclear electricity generators; batteries; nuclear systems and/or associated equipment; heavy electrical machinery; pumps including vacuum pumps; compressors; fans; blowers; oil hydraulic equipment; pneumatic equipment; metal working machinery; manipulators; robots and/or their application systems; tools; molds or dies; rolls; conveying equipment; elevating equipment; materials handling equipment; textile machinery; sewing machines; printing and/or related machinery; paper making machinery; chemical machinery; mining and/or construction machinery and/or related equipment; agriculture, forestry and/or fisheries machinery and/or implements; safety and/or environment preservation equipment; tractors; bearings; precision bearings; chains; gears; power transmission equipment; lubricators; valves; pipe fittings; and/or application systems for any of the previously mentioned equipment or machinery etc.).

A UE may, for example, be an item of transport equipment (for example transport equipment such as: rolling stocks; motor vehicles; motorcycles; bicycles; trains; buses; carts; rickshaws; ships and other watercraft; aircraft; rockets; satellites; drones; balloons etc.).

A UE may, for example, be an item of information and communication equipment (for example information and communication equipment such as: electronic computer and related equipment; communication and related equipment; electronic components etc.).

A UE may, for example, be an item of refrigeration equipment, a refrigeration application product and equipment, trade and/or service industry equipment, a vending machine, an automatic service machine, an office machine or equipment, a consumer electronic and electronic appliance (for example a consumer electronic appliance such as: audio equipment; a speaker; a radio; video equipment; a television; an oven range; a rice cooker; a coffee maker; a dishwasher; a washing machine; dryers, a fan, an exhaust fan and related products, a vacuum cleaner etc.).

A UE may, for example, be an electrical application system or equipment (for example an electrical application system or equipment such as: an x-ray system; a particle accelerator; radio isotope equipment; sonic equipment; electromagnetic application equipment; electronic power application equipment etc.).

A UE may, for example, be an electronic lamp, a luminaire, a measuring instrument, an analyzer, a tester, or a surveying or sensing instrument (for example a surveying or sensing instrument such as: a smoke alarm; a human alarm sensor; a motion sensor; a wireless tag etc.), a watch or clock, a laboratory instrument, optical apparatus, medical equipment and/or system, a weapon, a sharp-edged tool, a hand tool, or the like.

A UE may, for example, be a personal digital assistant or device with wireless communication capabilities (such as a wireless card or module designed for attachment to or for insertion into another electronic device (for example a personal computer, electrical measuring machine)).

A UE may be a device or a part of a system that provides applications, services, and solutions described below, as to "internet of things (IoT)", using a variety of wired and/or wireless communication technologies. Internet of Things devices (or "things") may be equipped with appropriate electronics, software, sensors, network connectivity, and/or the like, which enable these devices to collect and exchange data with each other and with other communication devices. IoT devices may comprise automated equipment that follow software instructions stored in an internal memory. IoT devices may operate without requiring human supervision or interaction. IoT devices might also remain stationary and/or inactive for a lengthy period of time. IoT devices may be implemented as a part of a (generally) stationary apparatus. IoT devices may also be embedded in non-stationary apparatus (e.g., vehicles) or attached to animals or persons to be monitored/tracked. It will be appreciated that IoT technology can be implemented on any communication devices that can connect to a communications network for sending/receiving data, regardless of whether such communication devices are controlled by human input or software instructions stored in memory. It will be appreciated that IoT devices are sometimes also referred to as Machine-Type Communication (MTC) devices, Machine-to-Machine (M2M) communication devices, or Narrow Band-IoT (NB-IoT) UE.

It will be appreciated that a UE may support one or more IoT or MTC applications.

Some examples of MTC applications are listed in 3GPP TS 22.368 V13.2.0 (2017-01-13), Annex B (the contents of which are incorporated herein by reference). This list is not exhaustive and is intended to be indicative of some examples of MTC applications. In this list, the Service Area of the MTC applications includes security, tracking & tracing, payment, health, remote maintenance/control, metering, and consumer devices.

Examples of the MTC applications regarding Security include surveillance systems, backup for landline telephone, control of physical access (e.g., to buildings), and car/driver security.

Examples of the MTC applications regarding tacking & tracing include fleet management, order management, telematics insurance: pay as you drive (PAYD), asset tracking, navigation, traffic information, road tolling, and road traffic optimisation/steering.

Examples of the MTC applications regarding payment include point of sales (POS), vending machines, and gaming machines.

Examples of the MTC applications regarding health include monitoring vital signs, supporting the aged or handicapped, web access telemedicine points, and remote diagnostics.

Examples of the MTC applications regarding remote maintenance/control include sensors, lighting, pumps, valves, elevator control, vending machine control, and vehicle diagnostics.

Examples of the MTC applications regarding metering include power, gas, water, heating, grid control, and industrial metering.

Examples of the MTC applications regarding consumer devices include digital photo frame, digital camera, and ebook.

Applications, services, and solutions may be an mobile virtual network operator (MVNO) service/system, an emergency radio communication service/system, a private branch exchange (PBX) service/system, a PHS/digital cordless telecommunications service/system, a point of sale (POS) service/system, an advertise calling service/system, a Multimedia Broadcast and Multicast Service (MBMS) service/system, a Vehicle to Everything (V2X) service/system, a train radio service/system, a location related service/system, a disaster/emergency wireless communication service/system, an Internet of Things (IoT) service/system, a community service/system, a video streaming service/system, a femto cell application service/system, a Voice over LTE (VoLTE) service/system, a radio tag service/system, a charging service/system, a radio on demand service/system, a roaming service/system, an activity monitoring service/system, a telecom carrier/communication NW selection service/system, a functional restriction service/system, a proof of concept (PoC) service/system, a personal information management service/system, a display video service/system, a non-communication service/system, an ad-hoc network/ delay tolerant networking (DTN) service/system, etc.

The above-described UE categories are merely examples of applications of the technical ideas and embodiments described in the present disclosure. The UE described in this disclosure is not limited to these examples and various modifications can be made thereto by those skilled in the art.

The above-described example embodiments are merely examples of applications of the technical ideas obtained by the inventors. These technical ideas are not limited to the above-described example embodiments and various modifications can be made thereto.

The whole or part of the example embodiments disclosed above can be described as, but not limited to, the following supplementary notes.

### (Supplementary Note 1)

A first server comprising:
at least one memory; and
at least one processor coupled to the at least one memory and configured to:
   in response to receiving from a requesting entity a request for a connection to an entity providing a service in an edge data network, attempt to identify a second server located in the edge data network based on at least one selection criterion;
   if the second server is identified, send information about the second server to the requesting entity; and
   if the second server cannot be identified, send to the requesting entity a rejection message indicating that the second server cannot be identified,
wherein the at least one selection criterion includes a congestion state of a server located within the edge data network.

### (Supplementary Note 2)

The first server according to Supplementary Note 1, wherein if the second server cannot be identified because a server located in the edge data network is congested, the rejection message indicates that the requesting entity should perform a backoff before sending a next request.

### (Supplementary Note 3)

The first server according to Supplementary Note 2, wherein the reject message includes a failure cause indicating that a server located within the edge data network is congested.

### (Supplementary Note 4)

The first server according to Supplementary Note 2 or 3, wherein the rejection message includes information to define a specific backoff time or maximum backoff time for the backoff.

### (Supplementary Note 5)

The first server according to any one of Supplementary Notes 2 to 4, wherein information indicating that a backoff should be performed includes at least one of: information to define a specific backoff time or maximum backoff time, or a failure cause.

### (Supplementary Note 6)

The first server according to any one of Supplementary Notes 1 to 5, wherein the at least one processor is configured to exclude information about a server located within the edge data network that is determined to be congested from the information about the second server.

### (Supplementary Note 7)

The first server according to any one of Supplementary Notes 1 to 6, wherein the rejection message causes the requesting entity to do at least one of the following: abort the request, suppress sending the request, resend the request, request a subscription update for the request, or notify an application for the service.

### (Supplementary Note 8)

The first server according to any one of Supplementary Notes 1 to 7, wherein
the first server is an Edge Configuration Server (ECS),
the second server is an Edge Enabler Server (EES) or a target EES, and
the requesting entity is an Edge Enabler Client (EEC) located in a User Equipment (UE), or a source EES.

### (Supplementary Note 9)

The first server according to any one of Supplementary Notes 1 to 7, wherein
the first server is an Edge Enabler Server (EES), a source EES, or a target EES,
the second server is an Edge Application Server (EAS) or a target EAS, and
the requesting entity is an Edge Enabler Client (EEC) located in a User Equipment (UE), a source EAS, or a source EES.

### (Supplementary Note 10)

A method performed by a first server, the method comprising:
in response to receiving from a requesting entity a request for a connection to an entity providing a service in an edge data network, attempting to identify a second server located in the edge data network based on at least one selection criterion;
if the second server is identified, sending information about the second server to the requesting entity; and
if the second server cannot be identified, sending to the requesting entity a rejection message indicating that the second server cannot be identified,
wherein the at least one selection criterion includes a congestion state of a server located within the edge data network.

### (Supplementary Note 11)

A program for causing a computer to perform a method for a first server, wherein the method comprises:
in response to receiving from a requesting entity a request for a connection to an entity providing a service in an edge data network, attempting to identify a second server located in the edge data network based on at least one selection criterion;
if the second server is identified, sending information about the second server to the requesting entity; and
if the second server cannot be identified, sending to the requesting entity a rejection message indicating that the second server cannot be identified,
wherein the at least one selection criterion includes a congestion state of a server located within the edge data network.

### (Supplementary Note 12)

A requesting entity comprising:
at least one memory; and
at least one processor coupled to the at least one memory and configured to:
   send to a first server a request for a connection to an entity providing a service in an edge data network;
   receive a response to the request from the first server;
   if the response contains information about a second server identified based on at least one selection criterion and located within the edge data network, use the information for a communication of providing the service; and
   if the response contains a rejection message indicating that the second server cannot be identified and the response indicates that a backoff is required, perform a backoff before sending a next request.

### (Supplementary Note 13)

The requesting entity according to Supplementary Note 12, wherein the at least one processor is configured to send the next request without a backoff if the response includes the rejection message but does not indicate that a backoff is required.

### (Supplementary Note 14)

The requesting entity according to Supplementary Note 12 or 13, wherein the at least one selection criterion includes a congestion state of the second server.

### (Supplementary Note 15)

The requesting entity according to any one of Supplementary Notes 12 to 14, wherein
the first server is an Edge Configuration Server (ECS),
the second server is an Edge Enabler Server (EES) or a target EES, and
the requesting entity is an Edge Enabler Client (EEC) located in a User Equipment (UE), or a source EES.

### (Supplementary Note 16)

The requesting entity according to any one of Supplementary Notes 12 to 14, wherein
the first server is an Edge Enabler Server (EES), a source EES, or a target EES,
the second server is an Edge Application Server (EAS) or a target EAS, and
the requesting entity is an Edge Enabler Client (EEC) located in a User Equipment (UE), a source EAS, or a source EES.

### (Supplementary Note 17)

A method performed by a requesting entity, the method comprising:
sending to a first server a request for a connection to an entity providing a service in an edge data network;
receiving a response to the request from the first server;
if the response contains information about a second server identified based on at least one selection criterion and located within the edge data network, using the information for a communication of providing the service; and
if the response contains a rejection message indicating that the second server cannot be identified and the response indicates that a backoff is required, performing a backoff before sending a next request.

### (Supplementary Note 18)

A program for causing a computer to perform a method for a requesting entity, wherein the method comprises:
sending to a first server a request for a connection to an entity providing a service in an edge data network;
receiving a response to the request from the first server;
if the response contains information about a second server identified based on at least one selection criterion and located within the edge data network, using the information for a communication of providing the service; and
if the response contains a rejection message indicating that the second server cannot be identified and the response indicates that a backoff is required, performing a backoff before sending a next request.

### (Supplementary Note 19)

A requesting entity comprising:
at least one memory; and
at least one processor coupled to the at least one memory and configured to:
   send to a first server a request for a connection to an entity providing a service in an edge data network;
   receive a response to the request from the first server;
   if the response contains information about a second server identified based on at least one selection criterion and located within the edge data network, use the information for a communication of providing the service; and
   if the response contains a rejection message indicating that the second server cannot be identified, suppress sending a request containing the same information as said request until a part of a selection criterion included in the at least one selection criterion is changed.

### (Supplementary Note 20)

The requesting entity according to Supplementary Note 19, wherein the at least one selection criterion includes EAS discovery filters.

### (Supplementary Note 21)

The requesting entity according to Supplementary Note 19 or 20, wherein the at least one selection criterion includes location information of a radio terminal containing the requesting entity.

### (Supplementary Note 22)

The requesting entity according to Supplementary Note 19 or 20, wherein the at least one selection criterion includes a congestion state of the second server.

### (Supplementary Note 23)

A method performed by a requesting entity, the method comprising:
sending to a first server a request for a connection to an entity providing a service in an edge data network;
receiving a response to the request from the first server;
if the response contains information about a second server identified based on at least one selection criterion and located within the edge data network, using the information for a communication of providing the service; and
if the response contains a rejection message indicating that the second server cannot be identified, suppressing sending a request containing the same information as said request until any part of a selection criterion included in the at least one selection criterion is changed.

### (Supplementary Note 24)

A first server comprising:
at least one memory; and
at least one processor coupled to the at least one memory and configured to:
   in response to receiving from a requesting entity a request for a connection to an entity providing a service in an edge data network, attempt to identify a second server located in the edge data network based on at least one selection criterion;
   if the second server is identified based on the at least one selection criterion, send information about the second server to the requesting entity; and
   if the second server cannot be identified based on the at least one selection criterion, send to the requesting entity a rejection message indicating that the second server cannot be identified,
wherein the rejection message causes the requesting entity to suppress sending a request containing the same information as said request until a part of a selection criterion included in the at least one selection criterion is changed.

### (Supplementary Note 25)

A method performed by a first server, the method comprising:
in response to receiving from a requesting entity a request for a connection to an entity providing a service in an edge data network, attempting to identify a second server located in the edge data network based on at least one selection criterion;
if the second server is identified based on the at least one selection criterion, sending information about the second server to the requesting entity; and
if the second server cannot be identified based on the at least one selection criterion, sending to the requesting entity a rejection message indicating that the second server cannot be identified,
wherein the rejection message causes the requesting entity to suppress sending a request containing the same information as said request until a part of a selection criterion included in the at least one selection criterion is changed.

This application is based upon and claims the benefit of priority from Japanese Patent Application No. 2021-023808, filed on February 17, 2021, the disclosure of which is incorporated herein in its entirety by reference.

### Reference Signs List

- 1: User Equipment (UE)
- 2: Edge Enabler Client (EEC)
- 3: Application client (AC)
- 4: Edge Data Network (EDN)
- 5: Edge Enabler Server (EES)
- 6: Edge Application Server (EAS)
- 7: Edge Configuration Server (ECS)
- 903: Baseband Processor
- 904: Application Processor
- 906: Memory
- 907: Modules
- 1002: Processor
- 1003: Memory
- 1004: Modules

## Claims

1. A first server comprising:
at least one memory; and
at least one processor coupled to the at least one memory and configured to:
in response to receiving from a requesting entity a request for a connection to an entity providing a service in an edge data network, attempt to identify a second server located in the edge data network based on at least one selection criterion;
if the second server is identified, send information about the second server to the requesting entity; and
if the second server cannot be identified, send to the requesting entity a rejection message indicating that the second server cannot be identified,
wherein the at least one selection criterion includes a congestion state of a server located within the edge data network.

2. The first server according to claim 1, wherein if the second server cannot be identified because a server located in the edge data network is congested, the rejection message indicates that the requesting entity should perform a backoff before sending a next request.

3. The first server according to claim 2, wherein the reject message includes a failure cause indicating that a server located within the edge data network is congested.

4. The first server according to claim 2 or 3, wherein the rejection message includes information to define a specific backoff time or maximum backoff time for the backoff.

5. The first server according to any one of claims 2 to 4, wherein information indicating that a backoff should be performed includes at least one of: information to define a specific backoff time or maximum backoff time, or a failure cause.

6. The first server according to any one of claims 1 to 5, wherein the at least one processor is configured to exclude information about a server located within the edge data network that is determined to be congested from the information about the second server.

7. The first server according to any one of claims 1 to 6, wherein the rejection message causes the requesting entity to do at least one of the following: abort the request, suppress sending the request, resend the request, request a subscription update for the request, or notify an application for the service.

8. The first server according to any one of claims 1 to 7, wherein
the first server is an Edge Configuration Server (ECS),
the second server is an Edge Enabler Server (EES) or a target EES, and
the requesting entity is an Edge Enabler Client (EEC) located in a User Equipment (UE), or a source EES.

9. The first server according to any one of claims 1 to 7, wherein
the first server is an Edge Enabler Server (EES), a source EES, or a target EES,
the second server is an Edge Application Server (EAS) or a target EAS, and
the requesting entity is an Edge Enabler Client (EEC) located in a User Equipment (UE), a source EAS, or a source EES.

10. A method performed by a first server, the method comprising:
in response to receiving from a requesting entity a request for a connection to an entity providing a service in an edge data network, attempting to identify a second server located in the edge data network based on at least one selection criterion;
if the second server is identified, sending information about the second server to the requesting entity; and
if the second server cannot be identified, sending to the requesting entity a rejection message indicating that the second server cannot be identified,
wherein the at least one selection criterion includes a congestion state of a server located within the edge data network.

11. A non-transitory computer readable medium storing a program for causing a computer to perform a method for a first server, wherein the method comprises:
in response to receiving from a requesting entity a request for a connection to an entity providing a service in an edge data network, attempting to identify a second server located in the edge data network based on at least one selection criterion;
if the second server is identified, sending information about the second server to the requesting entity; and
if the second server cannot be identified, sending to the requesting entity a rejection message indicating that the second server cannot be identified,
wherein the at least one selection criterion includes a congestion state of a server located within the edge data network.

12. A requesting entity comprising:
at least one memory; and
at least one processor coupled to the at least one memory and configured to:
send to a first server a request for a connection to an entity providing a service in an edge data network;
receive a response to the request from the first server;
if the response contains information about a second server identified based on at least one selection criterion and located within the edge data network, use the information for a communication of providing the service; and
if the response contains a rejection message indicating that the second server cannot be identified and the response indicates that a backoff is required, perform a backoff before sending a next request.

13. The requesting entity according to claim 12, wherein the at least one processor is configured to send the next request without a backoff if the response includes the rejection message but does not indicate that a backoff is required.

14. The requesting entity according to claim 12 or 13, wherein the at least one selection criterion includes a congestion state of the second server.

15. The requesting entity according to any one of claims 12 to 14, wherein
the first server is an Edge Configuration Server (ECS),
the second server is an Edge Enabler Server (EES) or a target EES, and
the requesting entity is an Edge Enabler Client (EEC) located in a User Equipment (UE), or a source EES.

16. The requesting entity according to any one of claims 12 to 14, wherein
the first server is an Edge Enabler Server (EES), a source EES, or a target EES,
the second server is an Edge Application Server (EAS) or a target EAS, and
the requesting entity is an Edge Enabler Client (EEC) located in a User Equipment (UE), a source EAS, or a source EES.

17. A method performed by a requesting entity, the method comprising:
sending to a first server a request for a connection to an entity providing a service in an edge data network;
receiving a response to the request from the first server;
if the response contains information about a second server identified based on at least one selection criterion and located within the edge data network, using the information for a communication of providing the service; and
if the response contains a rejection message indicating that the second server cannot be identified and the response indicates that a backoff is required, performing a backoff before sending a next request.

18. A non-transitory computer readable medium storing a program for causing a computer to perform a method for a requesting entity, wherein the method comprises:
sending to a first server a request for a connection to an entity providing a service in an edge data network;
receiving a response to the request from the first server;
if the response contains information about a second server identified based on at least one selection criterion and located within the edge data network, using the information for a communication of providing the service; and
if the response contains a rejection message indicating that the second server cannot be identified and the response indicates that a backoff is required, performing a backoff before sending a next request.

19. A requesting entity comprising:
at least one memory; and
at least one processor coupled to the at least one memory and configured to:
send to a first server a request for a connection to an entity providing a service in an edge data network;
receive a response to the request from the first server;
if the response contains information about a second server identified based on at least one selection criterion and located within the edge data network, use the information for a communication of providing the service; and
if the response contains a rejection message indicating that the second server cannot be identified, suppress sending a request containing the same information as said request until a part of a selection criterion included in the at least one selection criterion is changed.

20. The requesting entity according to claim 19, wherein the at least one selection criterion includes EAS discovery filters.

21. The requesting entity according to claim 19 or 20, wherein the at least one selection criterion includes location information of a radio terminal containing the requesting entity.

22. The requesting entity according to claim 19 or 20, wherein the at least one selection criterion includes a congestion state of the second server.

23. A method performed by a requesting entity, the method comprising:
sending to a first server a request for a connection to an entity providing a service in an edge data network;
receiving a response to the request from the first server;
if the response contains information about a second server identified based on at least one selection criterion and located within the edge data network, using the information for a communication of providing the service; and
if the response contains a rejection message indicating that the second server cannot be identified, suppressing sending a request containing the same information as said request until any part of a selection criterion included in the at least one selection criterion is changed.

24. A first server comprising:
at least one memory; and
at least one processor coupled to the at least one memory and configured to:
in response to receiving from a requesting entity a request for a connection to an entity providing a service in an edge data network, attempt to identify a second server located in the edge data network based on at least one selection criterion;
if the second server is identified based on the at least one selection criterion, send information about the second server to the requesting entity; and
if the second server cannot be identified based on the at least one selection criterion, send to the requesting entity a rejection message indicating that the second server cannot be identified,
wherein the rejection message causes the requesting entity to suppress sending a request containing the same information as said request until a part of a selection criterion included in the at least one selection criterion is changed.

25. A method performed by a first server, the method comprising:
in response to receiving from a requesting entity a request for a connection to an entity providing a service in an edge data network, attempting to identify a second server located in the edge data network based on at least one selection criterion;
if the second server is identified based on the at least one selection criterion, sending information about the second server to the requesting entity; and
if the second server cannot be identified based on the at least one selection criterion, sending to the requesting entity a rejection message indicating that the second server cannot be identified,
wherein the rejection message causes the requesting entity to suppress sending a request containing the same information as said request until a part of a selection criterion included in the at least one selection criterion is changed.
